# EUROPEAN PATENT APPLICATION

(11) **EP 3 241 658 A1**
(43) Date of publication of application: **08.11.2017**
(21) Application number: 17169182.7
(22) Date of filing: 03.05.2017
(51) Int. Cl.: B29C 45/00, B29C 45/14, B65D 1/26, B65D 25/36, B65D 1/46

(54) **THIN-WALL INJECTION MOULDED OBJECTS**

(30) Priority: 04.05.2016 GB 201607734
(71) Applicant: Dünnwand Verpackungs Beratungen UG, 90592 Schwarzenbruck-Nurnberg (DE)
(72) Inventor: Claes, Charles, 90592 Schwarzenbruck-Nurnberg (DE); Broekaert, Willem, 3500 Hasselt (BE)
(74) Representative: LC Patents

(57) **Abstract**

The present invention relates to a thin-walled object produced by injection moulding of a plastic polymer wherein the object has a low average wall thickness while having a high rigidity to weight ratio, thus requiring a low amount of plastic polymer per unit of wall surface of said object. At least one of the walls of such object comprises a first uniform wall section with essentially uniform wall thickness, a second uniform wall section with essentially uniform wall thickness, and a multi- ribbed wall section that connects said first and second uniform wall section, such multi-ribbed wall section comprising a plurality of primary ribs, a plurality of laminae, and an in-mould label.

## Description

### FIELD OF THE INVENTION

The present invention relates to a thin-walled object produced by injection moulding of a plastic polymer wherein the object has a low average wall thickness while having a high rigidity to weight ratio, thus requiring a low amount of plastic polymer per unit of wall surface of said object.

### BACKGROUND TO THE INVENTION

Injection moulding is a manufacturing process for producing objects by injecting material, such as for instance molten plastic polymeric material, also referred to as molten plastic, in a fluid or semifluid state into a mould. Material for the object is fed into a heated barrel, mixed, and forced under pressure into a mould cavity through one or more injection gates, where after the material is allowed to cool and harden such that it adopts a solid state in the configuration of the cavity. After adequate cooling and hardening, the mould is opened and the object ejected from the mould, the so-called demoulding.

Thin wall injection moulding is a specialized form of injection moulding that focuses on mass-produced plastic objects that are thin and light so that material cost savings can be made and production cycle times can be as short as possible. Thin wall injection moulding requires specialized moulding machines and specialized injection moulds that can operate under very high pressure and withstand high stresses and fast cycle times. Thin wall injection moulding is widely used for making food packaging, such as for the production of food containers and lids, but is also used in other industries such as in medicine (for instance in the production of disposable syringes) or telecommunication (for instance in the production of housings for handheld electronic devices).

Typically, thin wall injection moulded objects are considered as plastics objects with a wall thickness less than 1.0 mm (http://www.improve-your-injection-molding.com/thin-wall-injection-molding.html). A thin wall injection moulded object is further defined by the ratio of the maximum flow length (L) of the plastic material in the cavity to the wall thickness (wt), wherein such ratio is higher than 200:1 for thin wall injection moulded objects (http://www.improve-your-injection- molding.com/thin-wall-injection-molding.html). At a given injection pressure, the maximal flow length or distance that the plastic material can flow in the cavity is dependent on the thickness of the object. The plastic melt material forms a frozen skin on the outside walls of the cavity first and then starts to solidify towards the centre. The centre of the flow is the last to solidify, so the thinner the wall of the object, and hence the thinner the cavity, the faster solidification will occur.

Often the lowest possible wall thickness (wt) will be aimed at for a given L value, whereby the L value is defined by the desired shape and size of the object. The lowest possible wall thickness (wt) will result in products with the lowest possible weight requiring the lowest input of plastic. The L/wt ratio depends on several parameters such as the type of plastic material, injection temperature, injection pressure, and injection flow rate (injection velocity). Each of these parameters has its limits; therefore the L/wt ratio has a limit as well. For instance, increasing the injection pressure will increase the L/wt ratio, yet the power consumption during injection will increase and the mould will wear off faster. For instance, if the injection temperature is raised, then the viscosity of the polymer drops, which reduces the required injection pressure and hence improves the L/wt ratio, yet as a downside a longer cooling period will be required which will increase the cycle time and hence the costs per object. Moreover, above a given temperature the plastic polymers will be oxidized during moulding.

In manufacturing thin wall injection moulded packaging containers, the L/wt ratio is particularly important since such containers typically have their injection gate in the middle of the bottom wall, while the most important features requiring highest accuracy are located at the top edges of the opening at the top of the container, i.e. at the positions farthest away from the injection gate.

Important features located at the top edge of such containers include for instance screw threads for liquid-tight closure with a mating screw cap, snap-on ridges for liquid-tight closure with a mating ridge on a discrete lid, removable tear tabs or tear strips as tamper-evident means, and/or hinges for connection to a lid. Therefore, it is of utmost importance that the cavity of the moulds of such containers is properly filled with plastic material up to the top edges. Since the pressure of the plastic material melt drops with increasing distance from the injection gate, and appropriate pressure is required for proper filling of the cavities, the L/wt ratio should not be overstretched in order to avoid moulding defects in such containers. Such defects can include deformations, stress cracking, low strength, and poor surface quality, resulting in poorly looking objects of low quality.

Often, thin wall injection moulding is combined with the in-mould labelling technique. An in-mould label (IML) is a thin preformed film-shaped sheeted material, which can be optionally preprinted with the desired graphics and text messages. The IML is placed in the mould by vacuum or electrostatic force or another dedicated positioning means, where after the mould is closed and molten plastic material is injected into the mould, thus resulting in activation of the adhesive on the IML such that the label is adhered to the wall of the plastic object and becomes an integral part of it, for example as indicated in US2006123677.

Besides striving for the highest possible L/wt ratio in thin wall injection moulding through optimising the injection moulding parameters, it has been attempted to improve the rigidity-to-weight ratio of thin-wall injection moulded objects by using parts of walls consisting only of preformed film-shaped sheeted material, such as an IML. Patents US2097690, US3119540, US3436008, US3169689, US4261501, GB1348370, and WO2008035162, describe plastic objects, typically liquid-tight containers or cups, of which the walls consist in majority of a preformed film-shaped sheeted material, wherein such walls are reinforced in the corners and along the edges of their shapes with more rigid material, such as injection moulded broad plastic strips. This solution is attractive because on a weight basis sheeted plastic is cheaper than injection moulded plastic, and because lower thickness can be achieved in a film-forming process than through an injection moulding process.

However, because large surfaces of the walls of the containers and cups described in US2097690, US3119540, US3436008, US3169689, US4261501, GB1348370, and WO2008035162 consist of only the sheeted material, the rigidity of these walls, in particular the resistance of these walls to side pressure, is very low in comparison to conventional thin wall injection-moulded containers. Patents EP2236264, CA2445553 and DE3913468 provide examples of plastic objects, typically liquid-tight containers, of which the walls consist of an IML, onto which a support skeleton is applied by injection moulding. In the containers described in EP2236264, CA2445553 and DE3913468 the support skeleton consists of broad strips on the circumferential walls of a container, wherein these strips run from a bottom circumferential band to a top circumferential band, and wherein these strips of injection moulded plastic are alternated with zones in which the circumferential wall only consists of the IML. The alternation of zones in the walls with only an IML and zones where the IML is bonded at high temperature with injection moulded plastic causes problems with differential temperature profiles during the injection moulding cycle, and differential shrinking after the injection moulding cycle, resulting in wrinkling of the IML after cooling and demoulding. It has been suggested in EP2236264 that this problem can be solved by heating of the label in an oven or by contact in the injection mould, which however does not lead to a satisfactory result, and in addition can lead to an extended injection moulding cycle and/or to an increased cost per manufactured object.

A common drawback of the containers of patents US3119540, US3436008, GB1348370, WO2008035162, EP2236264, CA2445553 and DE3913468 is that the sheeted material typically contains additives for adhesion to the injection-moulded plastic polymer, which can come into contact with the content of the container. This is highly undesired in several cases, for instance when the content of such containers is a food or beverage product. When the sheeted material is a conventional in-mould label (IML) there is an additional risk that ink substances from the printed surface of the IML are transferred to the opposite IML side when these IMLs are placed into a stack or on a reel. Such ink substances can thus be transferred to the content of the container, even if the printed side of the IML is facing outwards of the container. This risk of transfer of undesired or harmful substances can be off-set by covering the IML with a second film, such that the printed surface is interior relative to the two outer sides of the composite bilayer film. Such composite films are however expensive to make, and have a higher thickness than monolayer IML films, which increases the use of plastic material without adding much rigidity.

Other attempts to increase the L/wt ratio have been undertaken by using the technique of walls with ribs combined with zones of lower thickness. Such ribs serve a dual function, the first of which is to provide a flow leader for molten plastic material during the filling of the mould, and the second is to provide structural reinforcement after completion of the moulding process and hence to improve the rigidity-to-weight ratio of thin-wall injection moulded objects. During the filling of the mould, the ribs act in effect as channels of greater thickness than the adjacent wall zone such that the flow of molten plastic is enhanced through these ribs. Examples of injection-moulded objects, typically containers, with thicker ribs or strips and thinner wall zones or with horizontal ribs projecting inwards have been described in US3944124, US4807775, WO2008074908, EP1582471, GB1332344, JP2006001569, JP2004284682, JP2014091563, DE2855501, GB1038897, WO2007108678, and WO2009137914. However, problems have been encountered when attempting to minimize the thickness of the thin wall zones in such containers in order to obtain light weight containers, since once the disparity in flow rates between the thinner zones and thicker ribs exceeds a certain amount poor quality of the manufactured object will ensue and the shape of the containers obtained after cooling will deviate from the intended shape, leading to variable and inconsistent shapes. In addition, the thinner the thin wall zones are designed, the larger the difference in thickness between the thin wall zone and the adjacent rib, and the more difficult it gets to eject the object during demoulding. This is particularly the case with containers with ribs with trajectories of which at least a part is not fully parallel to the direction of ejection of the object during demoulding, such as for instance for containers US3944124, WO2008074908, EP1582471, GB1332344, DE2855501, GB1038897, JP2011031937 and WO2007108678.

It has also proven difficult to use IMLs in injection-moulded objects with alternating thicker ribs and thin wall zones. It is known that differences in wall thickness cause the thinner wall zones to solidify first while the thicker walls zones are still fluid during the moulding process, which causes warping, twisting or cracking where the thick and thin sections meet (http://www.quickparts.com/learningcenter/basicsofinjectionmoldingdesign.aspx; http://www.pitfallsinmolding.com/index.html). This severely hampers the legibility of the label. Furthermore, a common problem observed with injection-moulded objects with alternating thicker ribs and thin wall zones comprising an IML is that the shape of the object is inconsistent. Often, bulging of the shape is observed. Bulged shapes can be a problem with containers since this leads to an increased nesting height upon stacking of the containers, and to difficulties with destacking. The nesting height of stacked containers can theoretically be reduced by increasing the slope of circumferential wall, yet this then in turn leads to increased space requirement of filled containers for a given volume content per container.

The container described in WO2013153142 has walls with ribs and thin wall zones applied by injection moulding against an IML. The ribs on the circumferential walls of the container in WO2013153142 have trajectories that are slanted relative to the symmetry axis of the container. It is argued in WO2013153142 that such slanted trajectories solve problems observed in containers with ribs with trajectories in the same the orientation as the direction of the flow of the plastic melt. The problems with the latter type of containers, of which the ribs typically have a vertical orientation in the circumferential wall of the container, when used in combination with an IML include unequal pace a filling of the melt front, risk of incomplete filling, risk of creation of air pockets, inconsistency and variability of the shape of the container, and irregularities at the surface of container. However, due to the slanted orientation of the ribs of the containers described in in WO2013153142, demoulding requires a rotating movement of the container. Such rotating movement is non-standard in the manufacture of plastic containers and requires an extra investment and increase cycle time. In addition, only containers with a circular transverse cross- section can be manufactured by the method of WO2013153142, which makes it unsuited for making containers with transverse cross-sectional shapes other than circles.

### SUMMARY OF THE INVENTION

In a first object of the present invention, a thin-walled object, preferably a thin-walled container comprising a bottom wall connected to a circumferential wall, is provided that is produced by injection moulding wherein at least one of the walls of such object comprises
- a first uniform wall section with essentially uniform wall thickness,
- a second uniform wall section with essentially uniform wall thickness, and,
- a multi-ribbed wall section, such multi-ribbed wall section comprising
   o a plurality of primary ribs that are made of injection moulded plastic polymer and that connect said first and second uniform wall section,
   o a plurality of laminae that are made of injection moulded plastic polymer and that extend in between said primary ribs, and
   o an in-mould label that is adhered to both said primary ribs and laminae,
said object being further characterized in that the average thickness of the multi-ribbed wall section at the level of said laminae is less than 50% of the average thickness of the multi-ribbed wall section at the level of said primary ribs, and that the average thickness of the in-mould label is less than 45% of the average thickness of the multi-ribbed wall section at the level of said laminae.

The feature of the presence of injection moulded laminae extending in between the injection moulded ribs adhered on an in-mould label surprisingly solves the problems of irregular wrinkling or other deformations of the wall surfaces observed when attempting to make injection-moulded objects with walls consisting solely of injection moulded ribs and in-mould labels, such as described in EP2236264, CA2445553 and DE3913468. The feature of the thickness of the in-mould label being 45% or less of the thickness of the injection-moulded laminae was surprisingly found to be essential to make objects that are not bulged or otherwise deformed relative to their intended shape dictated by the shape of the mould cavity. Such problem of bulging or other deformation was observed when attempting to make objects with ribs and thin wall zones applied by injection moulding against an in-mould label, for instance according to WO2013153142, next to other limitations encountered when attempting to make objects described in WO2013153142.

In a second object of the invention provides a method is provided for making a thin-walled object according to the first object of the invention.

### Numbered embodiments of the present invention are as follows:

1. A thin-walled container comprising a bottom wall (5) connected to the circumferential wall (1) wherein said container is produced by injection moulding and wherein at least one of the walls of said container comprises
   - a first uniform wall section (2) with essentially uniform wall thickness,
   - a second uniform wall section (3) with essentially uniform wall thickness, and,
   - a multi-ribbed wall section (10), such multi-ribbed wall section comprising
      o a plurality of primary ribs (11) that are made of injection moulded plastic polymer and that connect said first and second uniform wall sections,
      o a plurality of laminae (12) that are made of injection moulded plastic polymer and that extend in between said primary ribs (11), and
      o an in-mould label (13) that is adhered to both said primary ribs (11) and laminae (12),
   said container being further characterized in that the average thickness (b) of the multi-ribbed wall section (10) at the level of said laminae (12) is less than 50% of the average thickness (c) of the multi-ribbed wall section (10) at the level of said primary ribs (11), preferably being less than 0.22mm, and in that the average thickness (a) of the in-mould label is less than 45% of the average thickness (b) of the multi-ribbed wall section (10) at the level of said laminae (12).
2. A thin-walled container according to numbered embodiment 1 wherein said average thickness (a) of the in- mould label is less than 40% of said average thickness (b) of the multi-ribbed wall section (10) at the level of said laminae (12).
3. A thin-walled container according to numbered embodiments 1 to 2 wherein said average thickness (b) of the multi-ribbed wall section (10) at the level of said laminae (12) is less than 40% of said average thickness (c) of the multi-ribbed wall section (10) at the level of said primary ribs (11).
4. A thin-walled container according to any of the numbered embodiments 1 to 3 wherein the plurality of primary ribs (11) and laminae (12) form a contiguous layer.
5. A thin-walled container according to any of the numbered embodiments 1 to 4 wherein said primary ribs (11) are separated from each other and follow a substantially straight trajectory in at least one dimension.
6. A thin-walled container according to any of the numbered embodiments 1 to 5 wherein the average width (d) at half thickness of the primary ribs (11) is less than 6 times said average thickness (c), wherein said width (d) is defined as the distance between the two points (u) on either sides of the primary rib at a height corresponding to 50% of the shortest distance from the extreme point (p) at the top of the primary rib till the line connecting the two inflection points (t) on either side of the primary rib, wherein said inflection point (t) marks the transition between the primary rib and the adjacent lamina.
7. A thin-walled container according to any of the numbered embodiments 1 to 6 wherein the in-mould label (13) extends beyond the multi-ribbed wall section (10) into at least a part of the first uniform wall section (2) and/or into at least a part of the second uniform wall section (3).
8. A thin-walled container according to any of the numbered embodiments 1 to 7 wherein said multi-ribbed wall section (10) comprises a plurality of secondary ribs (21), wherein a secondary rib (21) is connected to a primary rib (11) through at least one end and follows a trajectory that diverges from the trajectory of the primary rib to which it is connected.
9. A thin-walled container according to the numbered embodiment 8 wherein the average thickness (f) of the multi- ribbed wall section (10) at the level of said secondary ribs (21) is less than 90% of said average thickness (c) of the multi-ribbed wall section (10) at the level of said primary ribs (11), and more than 111% of said average thickness (b) of the multi-ribbed wall section (10) at the level of said laminae (12).
10. A thin-walled container according to any of the numbered embodiments 1 to 9 wherein in the transverse cross- section through said multi-ribbed wall section (10), both sides of the primary ribs (11) are tapered so as to provide a gradual transition from said rib to the adjacent lamina.
11. A thin-walled container according to any of the numbered embodiments 1 to 10 wherein the ratio of the fraction of the surface of said multi-ribbed wall section (10) covered by said laminae over the fraction of the surface of said multi-ribbed wall section covered by said ribs is more than 2.5.
12. A thin-walled container according to any of the numbered embodiments 1 to 11 wherein the thin-walled container has a hollow shape and comprises a circumferential wall (1), said circumferential wall (1) comprising a multi-ribbed wall section (10).
13. A thin-walled container according to the numbered embodiment 12 wherein, in the longitudinal cross-section through the first or second uniform wall section (2,3), the edge of the first or second uniform wall section (2,3) adjacent to a lamina (12) is tapered so as to provide a gradual transition from the first or second uniform wall section to the adjacent lamina.
14. A thin-walled container according to any of the numbered embodiments 12 to 13 wherein said primary ribs (11) have trajectories that lie essentially in a virtual plane encompassing the longitudinal centroidal axis of said circumferential wall (1).
15. A thin-walled container according to the numbered embodiment 14 wherein said primary ribs (11) follow a substantially straight trajectory that lies essentially in a virtual plane encompassing the longitudinal centroidal axis of said circumferential wall (1).
16. A thin-walled container according to the numbered embodiment 15 wherein the primary ribs (11) have a wedge-like shape in the longitudinal direction, such that said width (d) at half thickness is narrowest at the top of said primary rib and widest at the bottom of said primary rib and becomes gradually wider from top to bottom of said primary rib.
17. A thin-walled container according to any of the numbered embodiments 12 to 16 wherein said first uniform wall section (2) is a circumferential band at the bottom of the circumferential wall (1) and said second uniform wall section (3) is a circumferential band at or just below the top edge of the circumferential wall (1).
18. A thin-walled container according to the numbered embodiment 1 wherein the container comprises one or more holes or slits at the bottom wall (5) and/or at the bottom of the circumferential wall (1).
19. A thin-walled container according to the numbered embodiment 18 wherein the bottom edge of the first uniform wall section (2) and the bottom edge of the in-mould label are positioned below the junction of the bottom wall (5) with the circumferential wall (1), and wherein the top edge of the first uniform wall section (2) is positioned above the junction of the bottom wall (5) with the circumferential wall (1).
20. A method to make a thin-walled container according to any of the numbered embodiments 1 to 19, said method comprising
   - placing said in-mould label on the core mould part,
   - bringing a core mould part into the hollow mould part, said core mould part comprising depressions at the zone corresponding to said multi-ribbed wall section, such that the space between the depressed sections of said zone of the core mould part and said in-mould label in the hollow mould part allows to form the plurality of said ribs, and such that the space between the non- depressed sections of said zone of the core mould part and said in-mould label in the hollow mould part allows to form the plurality of said laminae,
      - injecting molten plastic polymer into the cavity of the mould,
      - demoulding the mould after the injected plastic polymer has hardened, and
      - ejecting the object from the core mould part with a linear movement,
   wherein the average thickness of the in-mould label is less than 45% of the average thickness of the space between the non-depressed sections of said zone of the core mould part and the adjacent said hollow mould part.
21. A method to make a thin-walled container according to any of the numbered embodiments 1 to 19, said method comprising
   - placing said in-mould label on the core mould part,
   - bringing a core mould part with said in-mould label into the hollow mould part, said hollow mould part comprising depressions at the zone corresponding to said multi-ribbed wall section, such that the space between the depressed sections of said zone of the hollow mould part and said in- mould label on the core mould part allows to form the plurality of said ribs, and such that the space between the non-depressed sections of said zone of the hollow mould part and said in-mould label on the core mould part allows to form the plurality of said laminae,
   - injecting molten plastic polymer into the cavity of the mould,
      - demoulding the mould after the injected plastic polymer has hardened, and
      - ejecting the object from the core mould part with a linear movement,
   wherein the average thickness of the in-mould label is less than 45% of the average thickness of the space between the non-depressed sections of said zone of the hollow mould part and the adjacent said core mould part.

### BRIEF DESCRIPTION OF THE DRAWINGS

With specific reference now to the figures, it is stressed that the particulars shown are by way of example and for purposes of illustrative discussion of the different embodiments of the present invention only. They are presented in the cause of providing what is believed to be the most useful and readily description of the principles and conceptual aspects of the invention. In this regard no attempt is made to show structural details of the invention in more detail than is necessary for a fundamental understanding of the invention. The description taken with the drawings making apparent to those skilled in the art how the several forms of the invention may be embodied in practice.

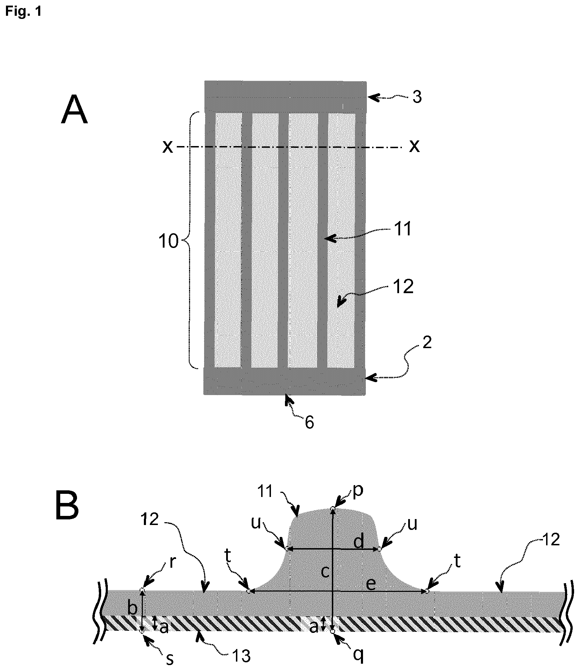

Fig. 1: Panel A: Schematic representation of a thin-walled object with two parallel uniform wall sections (2,3) connected by a multi-ribbed wall section (10). Panel B: Top view of the transverse cross-section x-x through part of the multi-ribbed wall section of the object represented in panel A, showing a primary rib (11) and the adjacent laminae (12) adhered to an in-mould label (13). The in-mould label is represented by the cross-hatched area, the injection moulded plastic polymer is represented by the grey area. The double waved line marks interruption of the representation of the cross-sectional view.

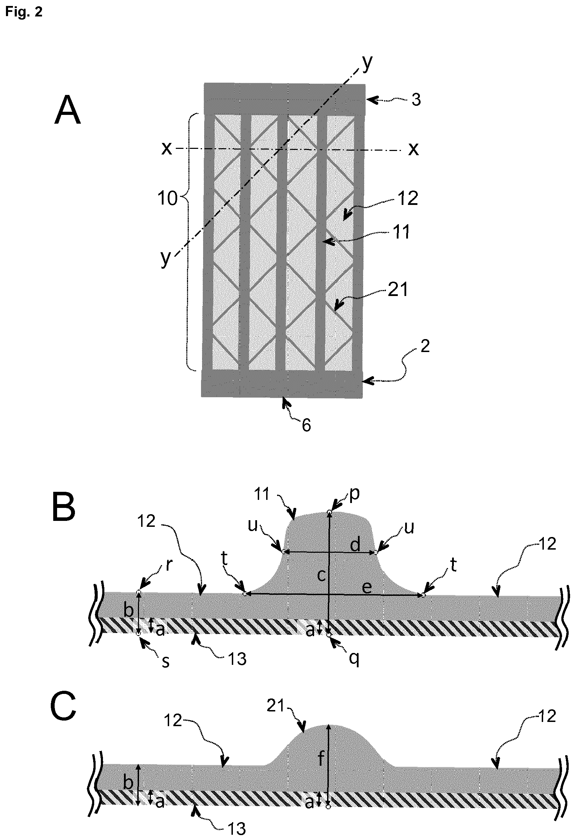

Fig. 2: Panel A: Schematic representation of a thin-walled object with two parallel uniform wall sections (2,3) connected by a multi-ribbed wall section (10). Panel B: Top view of the transverse cross-section x-x through part of the multi-ribbed wall section of the object represented in panel A, showing a primary rib (11) and the adjacent laminae (12) adhered to an in-mould label (13). The in-mould label is represented by the cross-hatched area, the injection moulded plastic polymer is represented by the grey area. The double waved line marks interruption of the representation of the cross-sectional view. Panel C: Top view of the cross-section y-y through part of the multi-ribbed wall section of the object represented in panel A, showing a secondary rib (21) and the adjacent laminae (12) adhered to an in- mould label (13). The in-mould label is represented by the cross-hatched area, the injection moulded plastic polymer is represented by the grey area. The double waved line marks interruption of the representation of the cross-sectional view.

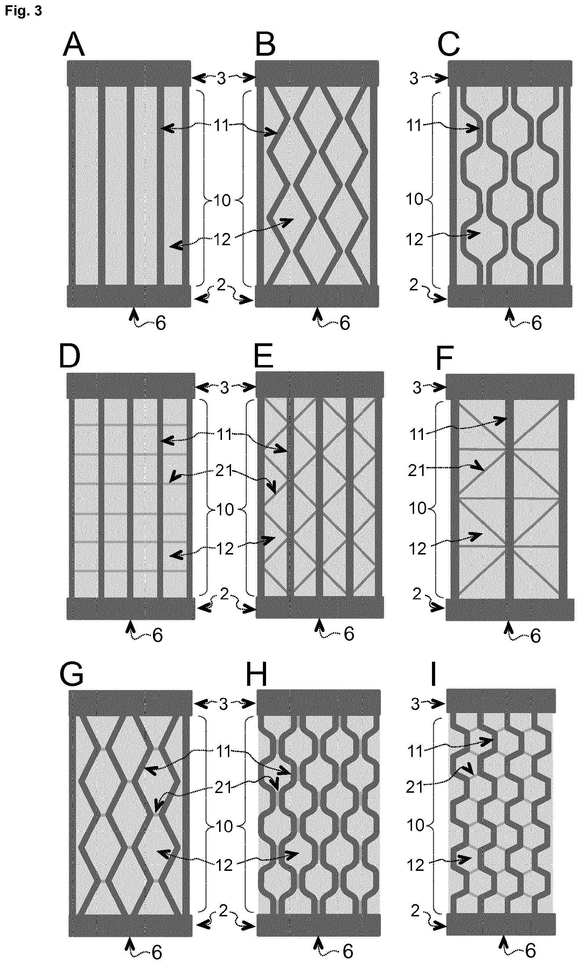

Fig. 3: Schematic representation of thin-walled objects with two parallel uniform wall sections (2,3) connected by a multi-ribbed wall section (10). Versions with different geometries of the ribs and laminae are shown in the different panels.

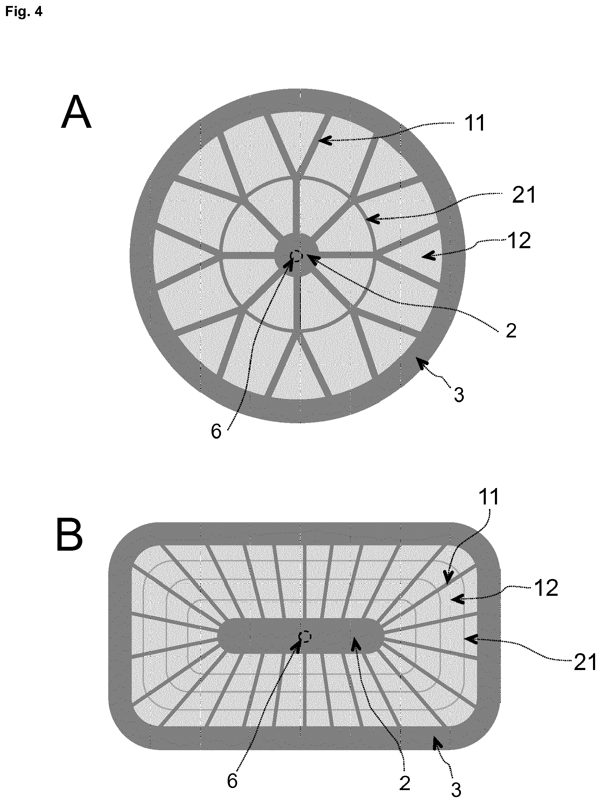

Fig. 4: Schematic representation of thin-walled objects with a centrally located first uniform wall section (2) surrounded concentrically by a second uniform wall section (3) connected to the first uniform wall section by a multi-ribbed wall section (10). Versions with different geometries of the ribs and laminae are shown in the different panels.

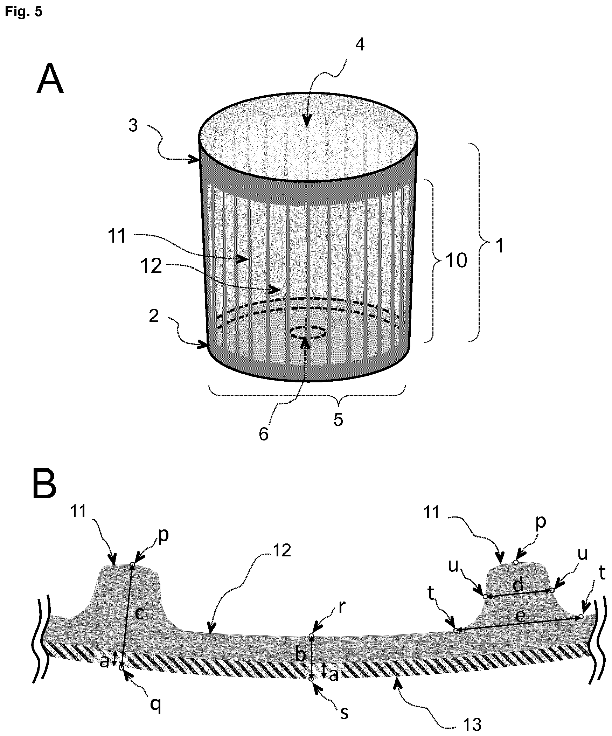

Fig. 5: Panel A: Perspective view of a thin-walled container with a circular transverse cross- section. Panel B: Top view of the cross-section perpendicular on the tangent plane touching the multi-ribbed wall section (10) through part of the multi-ribbed wall section of the container represented in panel A, showing primary ribs (11) and laminae (12) adhered to an in-mould label (13). The in-mould label is represented by the cross-hatched area, the injection moulded plastic polymer is represented by the grey area. The double waved line marks interruption of the representation of the cross-sectional view.

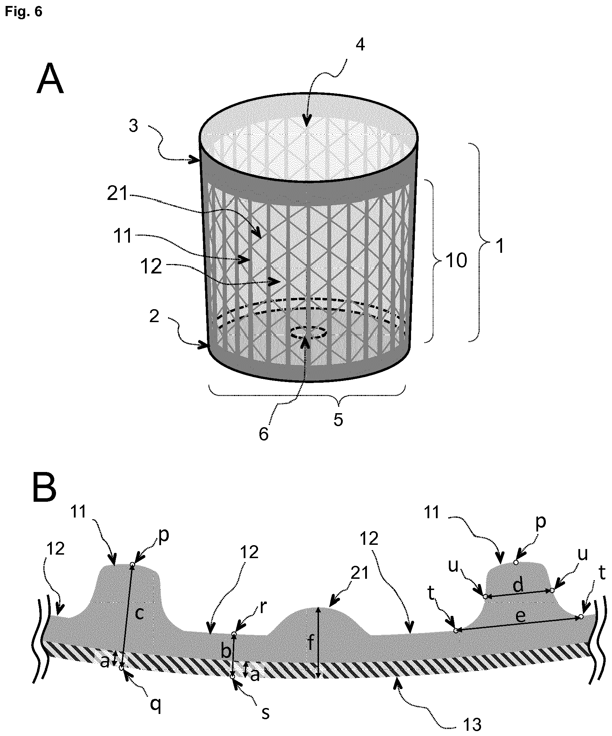

Fig. 6: Panel A: Perspective view of a thin-walled container with a circular transverse cross- section. Panel B: Top view of the cross-section perpendicular on the tangent plane touching the multi-ribbed wall section (10) through part of the multi-ribbed wall section of the container represented in panel A, showing primary ribs (11), secondary ribs (21) and laminae (12) adhered to an in-mould label (13). The in-mould label is represented by the cross-hatched area, the injection moulded plastic polymer is represented by the grey area. The double waved line marks interruption of the representation of the cross-sectional view.

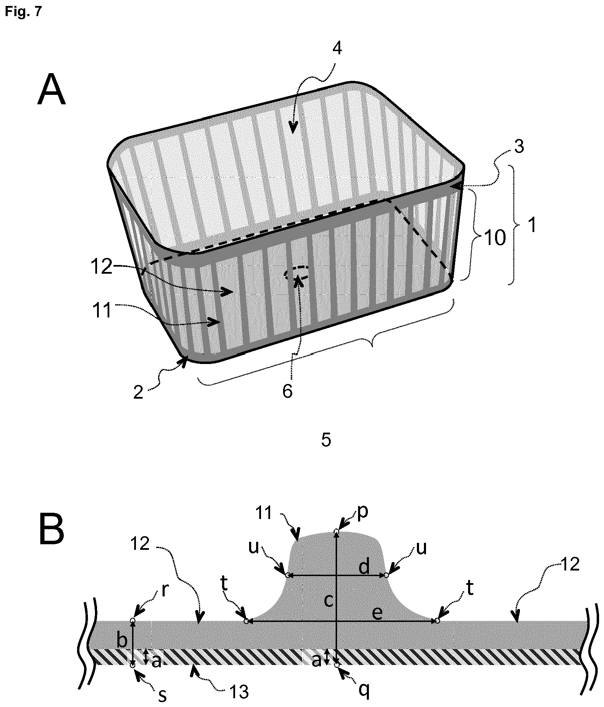

Fig. 7: Panel A: Perspective view of a thin-walled container with a rectangular transverse cross- section. Panel B: Top view of the cross-section perpendicular on the tangent plane touching the multi-ribbed wall section (10) through part of the multi-ribbed wall section of the container represented in panel A, showing a primary rib (11) and adjacent laminae (12) adhered to an in-mould label (13). The in-mould label is represented by the cross-hatched area, the injection moulded plastic polymer is represented by the grey area. The double waved line marks interruption of the representation of the cross-sectional view.

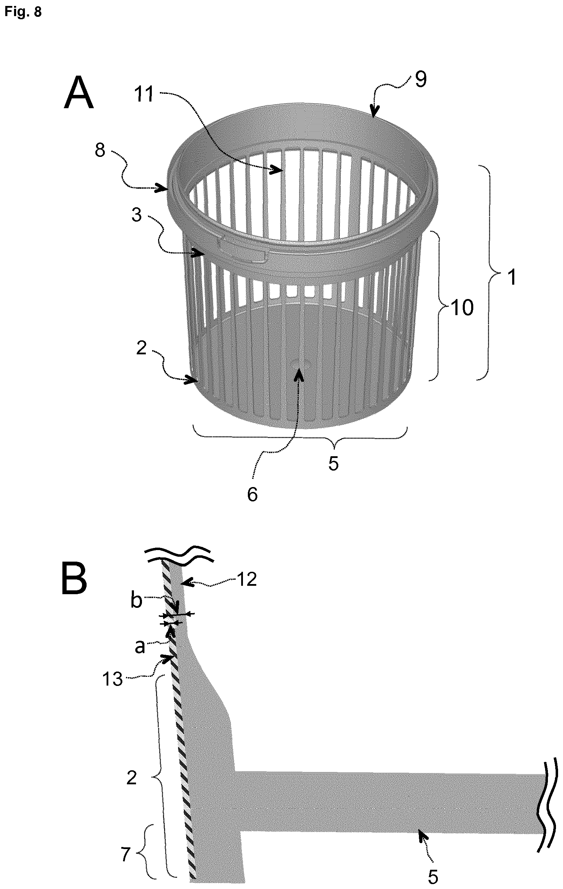

Fig. 8: Panel A: Perspective view of a thin-walled object in the form of a container with a bottom wall (5) with an injection gate mark (6) and a circumferential wall (1) with a multi-ribbed wall section (10). For the sake of clarity of the representation, in the multi-ribbed wall section only the primary ribs (11) are shown but not the laminae nor the in-mould label. Panel B: Top view of a longitudinal cross-section along a virtual plane encompassing the longitudinal centroidal axis of the container. The in-mould label is represented by the cross- hatched area, the injection moulded plastic polymer is represented by the grey area. The double waved line marks interruption of the representation of the cross-sectional view.

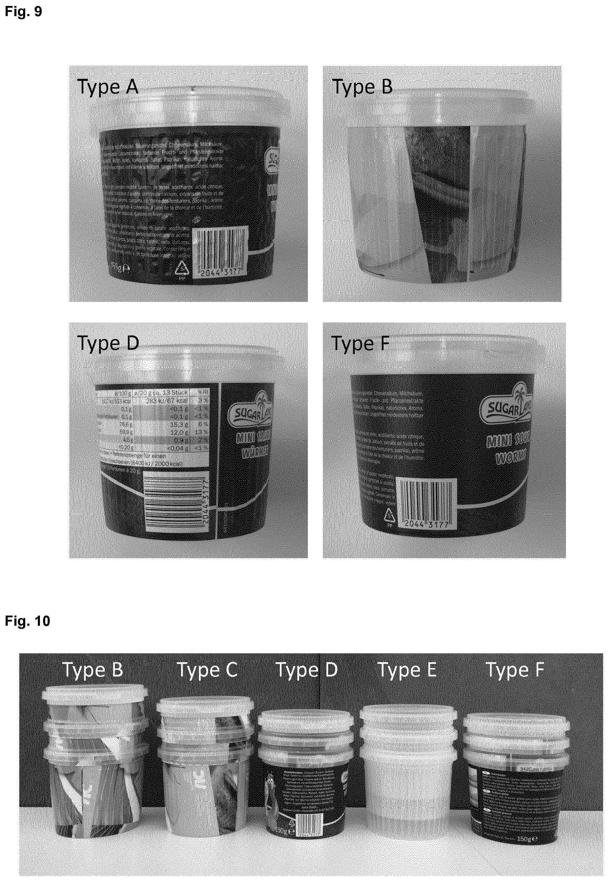

Fig. 9: Side views of containers of type A, B, D and F.
Fig. 10: Stacks of 3 nested containers of type B, C, D, E and F.

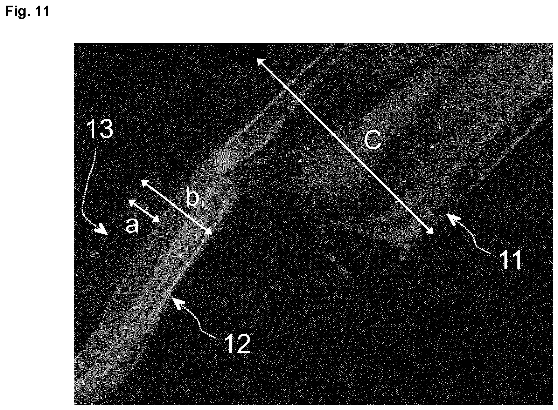

Fig. 11: Photomicrograph of a coupe of the multi-ribbed wall section (10) of the circumferential wall of the container of type D, wherein the coupe is cut in the direction perpendicular on the multi-ribbed wall section.

### DETAILED DESCRIPTION OF THE INVENTION

With reference to Figure 1, in a first object of the present invention, a thin-walled object, preferably a thin-walled container comprising a bottom wall (5) connected to a circumferential wall (1) is provided that is produced by injection moulding wherein at least one of the walls of such object comprises
- a first uniform wall section (2) with essentially uniform wall thickness,
- a second uniform wall section (3) with essentially uniform wall thickness, and,
- a multi-ribbed wall section (10), such multi-ribbed wall section comprising
   ∘ a plurality of primary ribs (11) that are made of injection moulded plastic polymer and that connect said first and second uniform wall section,
   ∘ a plurality of laminae (12) that are made of injection moulded plastic polymer and that extend in between said primary ribs (11), and
   ∘ an in-mould label (13) that is adhered to both said primary ribs (11) and laminae (12).
Said second uniform wall section (3) is situated farther away from the nearest injection gate mark (6) than said first uniform wall section (2).

Preferably, said primary ribs (11) of the multi-ribbed wall section (10) of said object have trajectories that lie essentially in the same orientation as the flow of plastic polymer from said first uniform wall section (2) to said second uniform wall section (3). Preferably, said primary ribs (11) of the multi-ribbed wall section (10) of said object are separated from each other. Preferably, said primary ribs (11) of the multi-ribbed wall section (10) of said object have substantially equal shapes and dimensions. Preferably, said primary ribs (11) follow a substantially straight trajectory in at least one dimension. Alternatively, said primary ribs (11) follow a zigzag or waved trajectory, whereby each primary rib with a zigzag or waved trajectory alternately approaches a laterally adjacent primary rib within convergence zones. In a preferred embodiment, the primary ribs (11) protrude away from the in-mould label (13), particularly in the dimension perpendicular on the tangent plane touching the in-mould label.

Preferably, the plurality of primary ribs (11) and laminae (12) of the multi-ribbed wall section (10) of said object form a contiguous layer.

Preferably, the in-mould label (13) present in the multi-ribbed wall section (10) extends beyond the multi-ribbed wall section (10) into at least part of the first uniform wall section (2). Preferably, the in-mould label (13) present in the multi-ribbed wall section (10) extends beyond the multi- ribbed wall section (10) into at least part of the first uniform wall section (2) and/or into at least part of the second uniform wall section (3). Preferably, the first uniform wall section (2) and the multi-ribbed wall section (10) are part of the same wall, in particular with a planar or non-planar surface without abrupt bends or folds. Preferably, the first uniform wall section (2) and the multi- ribbed wall section (10) are part of the same wall with a surface that is substantially straight in at least one dimension. Preferably, the first uniform wall section (2) and the multi-ribbed wall section (10) have a continuous surface in contact with the in-mould label (13). Preferably, the first uniform wall section (2), the second uniform wall section (3) and the multi-ribbed wall section (10) are part of the same wall, in particular with a planar or non-planar surface without abrupt bends or folds. Preferably, the first uniform wall section (2), the second uniform wall section (3) and the multi-ribbed wall section (10) are part of the same wall with a surface that is straight in at least one dimension. Preferably, the first uniform wall section (2), the second uniform wall section (3) and the multi-ribbed wall section (10) have a continuous surface in contact with the in-mould label (13).

When the in-mould label (13) extends beyond the multi-ribbed wall section (10) into the first uniform wall section (2), and when the first uniform wall section (2) and the multi-ribbed wall section (10) are part of the same wall, in particular with a planar or non-planar surface without abrupt bends or folds, then a better and more uniform filling of the mould cavity at the level of the multi-ribbed wall section (10) has been observed.

In a particular embodiment, the in-mould label (13) extends beyond the multi-ribbed wall section (10) into the first uniform wall section (2) and into the second uniform wall section (3). In another particular embodiment, said in-mould label extends beyond the multi-ribbed wall section and extends over the complete outer surface of the first uniform wall section (2).

The thickness (b) is the thickness of the multi-ribbed wall section (10) at the level of a lamina (12). The thickness (b) is determined as the shortest distance between point (r) on the outside surface of the lamina and the opposite point (s) on the outside surface of the in-mould label in a direction perpendicular on the tangent plane touching either point (r) or point (s). The average thickness of said in-mould label (a) is preferably less than 45%, more preferably less than 40%, most preferably less than 35%, such as less than 30% or less than 25% of the average thickness (b) of the multi- ribbed wall section (10) at the level of said laminae (12). The average thickness of said in-mould label (a) is preferably more than 5% of said average thickness (b).

The feature of the thickness of the in-mould label being 45% or less of the thickness of the injection-moulded laminae was surprisingly found to be essential to make objects that are not bulged or otherwise deformed relative to their intended shape dictated by the shape of the mould cavity. Such problem of bulging or other deformation was observed when attempting to make objects with ribs and thin wall zones applied by injection moulding against an in-mould label, for instance according to WO2013153142, next to other limitations encountered when attempting to make objects described in WO2013153142.

The said average thickness (b) of the multi-ribbed wall section (10) at the level of said laminae (12) is preferably lower than 0.22 mm, more preferably lower than 0.20 mm, most preferably lower than 0.18 mm, such as lower than 0.16 mm or lower than 0.15 mm. The average thickness (b) of the multi-ribbed wall section (10) at the level of said laminae (12) is preferably more than 0.02 mm, more preferably more than 0.04 mm.

The thickness (c) is the thickness of the multi-ribbed wall section (10) at the level of a primary rib (11). The thickness (c) is determined as the shortest distance between the most extreme point (p) on the outside surface of the primary rib and the opposite point (q) on the outside surface of the in-mould label in a direction perpendicular on the tangent plane touching either point (p) or point (q). The average thickness (b) of the multi-ribbed wall section (10) at the level of said laminae (12) is preferably less than 50%, more preferably less than 40%, most preferably less than 35%, such as less than 30% or less than 25% of the average thickness (c) of the multi-ribbed wall section (10) at the level of said primary ribs (11). Said average thickness (b) is preferably more than 5%, such as more than 10%, of said average thickness (c).

Since the aim of the present invention is to make thin-walled objects that are thin in relation to their size (i.e. objects with a high L/wt ratio wherein L is the maximum flow length of the plastic material in the mould cavity and wt is the wall thickness) the average thickness (c) of the multi-ribbed wall section at the level of the primary ribs will be selected to be as thin as practically possible to get complete filling of the extremities of the cavity relative to the injection gate. The requirement of the average thickness (b) of the multi-ribbed wall section at the level of the laminae to be 50% or less of the thickness of the average thickness (c) of the multi-ribbed wall section at the level of the primary ribs, combined with the requirement of the average thickness of the in-mould label to be 45% or less of the average thickness (b) of the multi-ribbed wall section at the level of the laminae, means that the thickness of the in-mould label needs to be very low relative to its surface. Without wishing to be bound by theory, it appears that the low thickness of the in-mould label in relation to the thickness of the laminae allows to sufficiently warm up the in- mould label by the plastic melt during injection. This warming up attenuates temperature gradients occurring across the transverse cross-section of the multi-ribbed wall while the object is still present in the mould, thus avoiding deformations occurring after demoulding of the object. Therefore, the feature of low thickness of the in-mould label in relation to the thickness of the laminae allows to manufacture decorated injection-moulded non-deformed objects with regular surface, without the drawbacks of the injection-moulded objects described in the prior art.

Said in-mould label (13) is, prior to adhesion to said ribs and laminae, a preformed sheeted material with a thickness of preferably less than 0.100 mm, more preferably less than 0.075 mm, most preferably less than 0.065 mm, such as less than 0.055 mm or less than 0.045 mm. Said in- mould label (13) is, prior to adhesion to said ribs and laminae, a preformed sheeted material with a thickness of preferably more than 0.008 mm, such as more than 0.010 mm or more than 0.015 mm.

The width (e) is a measure for the full width of a primary rib and is measured as the distance between the two inflection points (t) on either side of the primary rib wherein said inflection point (t) marks the transition between the primary rib and the adjacent lamina. The width (d) is a measure for the width of a primary rib at half thickness, and is measured as the distance between the two points (u) on either sides of the primary rib at a height corresponding to 50% of the shortest distance from the extreme point (p) at the top of the primary rib till the line connecting the two inflection points (t) on either side of the primary rib, wherein said inflection point (t) marks the transition between the primary rib and the adjacent lamina.

With reference to Figure 2, the multi-ribbed wall section (10) of said object comprises a plurality of primary ribs (11), and optionally comprises a plurality of secondary ribs (21), wherein a secondary rib (21) is connected to a primary rib (11) through at least one end and follows a trajectory that diverges from the trajectory of the primary rib to which it is connected (Figure 2A). Preferably, said secondary ribs are thinner than said primary ribs but thicker than the laminae (Figure 2B). Preferably, the average thickness (f) of the multi-ribbed wall section (10) at the level of said secondary ribs (21) is lower than the average thickness (c) of the multi-ribbed wall section (10) at the level of said primary ribs (11) and higher than said average thickness (b) of the multi-ribbed wall section (10) at the level of said laminae (12) (Figure 2B). Preferably, the average thickness (f) of the multi-ribbed wall section (10) at the level of said secondary ribs (21) is less than 90%, such as less than 80%, of the average thickness (c) of the multi-ribbed wall section (10) at the level of said primary ribs (11), and more than 111%, such as more than 125% of said average thickness (b) of the multi-ribbed wall section (10) at the level of said laminae (12) (Figure 2B). The ribs confer strength to the thin-wall object after it has been formed by injection moulding. During injection moulding, the primary ribs serve to transport the plastic melt from the gate towards the extremities of the object, while the secondary ribs, if present, facilitate distribution of the plastic melt to the zones situated laterally from the primary ribs, without substantially slowing down or otherwise interfering with the transport of the plastic melt through the primary ribs. Tertiary ribs can optionally be present in the multi-ribbed wall section (10), wherein the average thickness of said tertiary ribs is lower than the average thickness (f) of the multi-ribbed wall section (10) at the level of said secondary ribs (21) and higher than average thickness (b) of the multi-ribbed wall section (10) at the level of said laminae (12). Preferably, the average thickness of said tertiary ribs is less than 90%, such as less than 80%, of the average thickness (f) of the multi-ribbed wall section (10) at the level of said secondary ribs (21), and more than 111%, such as more than 125%, of the average thickness (b) of the multi-ribbed wall section (10) at the level of said laminae (12). Preferably, the secondary ribs (21) protrude away from the in-mould label (13), particularly in the dimension perpendicular on the tangent plane touching the in-mould label.

Alternative configurations of the multi-ribbed wall section (10) are shown in Figures 3 and Figure 4, by way of non-limitative examples. Figure 3 shows examples of objects wherein the first uniform wall section (2) second uniform wall section (3) are strips that run parallel relative to each other. Figure 3 shows examples of objects wherein the second uniform wall section (3) concentrically surrounds the first uniform wall section (2), and wherein the injection gate is located at the centroid of the first uniform wall section. The primary ribs (11) can either have substantially straight trajectories (Figures 3A, 3D, 3E, 3F and 4B), zigzag trajectories (Figure 3B and 3G), waved trajectories (Figure 3C, Figure 3I), or furcated trajectories wherein the stem of the furcated trajectory is located closer to the first uniform wall section (Figure 4A). The trajectories of the secondary ribs (21) can run perpendicular relative to the trajectories of the primary ribs (for instance Figure 3D, 3G, or 3H), can run at an angle relative to relative to the trajectory of the primary ribs (for instance Figures 3E, 3I), can run concentric relative to the second uniform wall section (for instance Figures 4A, 4B), or combinations thereof (for instance Figure 3F).

With reference to Figure 5, a particular embodiment of the first object of the present invention provides for a thin-walled hollow object produced by injection moulding, wherein said hollow object comprises a circumferential wall (1) comprising
- a first uniform wall section (2) with essentially uniform wall thickness,
- a second uniform wall section (3) with essentially uniform wall thickness, and,
- a multi-ribbed wall section (10), such multi-ribbed wall section comprising
   ∘ a plurality of primary ribs (11) that are made of injection moulded plastic polymer and that connect said first and second uniform wall section,
   ∘ a plurality of laminae (12) that are made of injection moulded plastic polymer and that extend in between said primary ribs (11), and
   ∘ an in-mould label (13) that is adhered to both said primary ribs (11) and laminae (12).
Said second uniform wall section (3) of said circumferential wall (1) of said hollow object is situated farther away from the nearest injection gate mark (6) than said first uniform wall section (2).

Preferably, said primary ribs (11) of the multi-ribbed wall section (10) of said object have trajectories that lie essentially in the same orientation as the flow of plastic polymer from said first uniform wall section (2) to said second uniform wall section (3). Preferably, said primary ribs (11) have trajectories that are separated from each other. Preferably, said primary ribs (11) of the multi-ribbed wall section (10) of said hollow object have substantially equal shapes and dimensions. Preferably, said primary ribs (11) are positioned at approximately equal distances relative to each other. Preferably, said primary ribs (11) have trajectories that lie essentially in a virtual plane encompassing the longitudinal centroidal axis of the circumferential wall. Preferably, said primary ribs (11) have trajectories of which the long symmetry axes lie essentially in a virtual plane encompassing the longitudinal centroidal axis of the circumferential wall. Preferably, said primary ribs (11) follow a substantially straight trajectory in at least one dimension. Preferably, the primary ribs (11) in the multi-ribbed wall section (10) of said hollow object have trajectories that are substantially straight and lie essentially in a virtual plane encompassing the longitudinal centroidal axis of the circumferential wall. Preferably, the primary ribs (11) in the multi-ribbed wall section (10) of said hollow object have a wedge-like shape in the longitudinal direction, such that the width (d) at half thickness is narrowest at the top of the primary rib (11) and widest at the bottom of the primary rib (11) and becomes gradually wider from top to bottom of the primary rib. Alternatively, said primary ribs (11) follow a zigzag or waved trajectory, whereby each primary rib with a zigzag or waved trajectory alternately approaches a laterally adjacent primary rib within convergence zones.

Within the circumferential wall (1) of said hollow object, the average thickness of said in-mould label (a) is preferably less than 45%, more preferably less than 40%, most preferably less than 35%, such as less than 30% or less than 25% of the average thickness (b) of the multi-ribbed wall section (10) at the level of said laminae (12). Within the circumferential wall (1) of said hollow object, the average thickness of said in-mould label (a) is preferably more than 5% of said average thickness (b).
Within the circumferential wall (1) of said hollow object, the said average thickness (b) of the multi-ribbed wall section (10) at the level of said laminae (12) is preferably lower than 0.22 mm, more preferably lower than 0.20 mm, most preferably lower than 0.18 mm, such as lower than 0.16 mm or lower than 0.15 mm. Within the circumferential wall (1) of said hollow object, said average thickness (b) is preferably more than 0.02 mm, more preferably more than 0.04 mm.

Within the circumferential wall (1) of said hollow object, the average thickness (b) of the multi-ribbed wall section (10) at the level of said laminae (12) is preferably less than 50%, more preferably less than 40%, most preferably less than 35%, such as less than 30% or less than 25% of the average thickness (c) of the multi-ribbed wall section (10) at the level of said primary ribs (11). Within the circumferential wall (1) of said hollow object, said average thickness (b) is preferably more than 5%, such as more than 10%, of said average thickness (c).

Preferably, the in-mould label (13) present in the multi-ribbed wall section (10) of the circumferential wall (1) of said hollow object extends beyond the multi-ribbed wall section (10) into the first uniform wall section (2) at the bottom edge of the circumferential wall (1). Preferably, the in-mould label (13) present in the multi-ribbed wall section (10) of the circumferential wall (1) of said hollow object extends beyond the multi-ribbed wall section (10) into at least a part of one of such uniform wall sections, such as the first uniform wall section (2) at the bottom edge of the circumferential wall (1) and/or the second uniform wall section (3) at the top edge of the circumferential wall (1) of the hollow object.

Preferably, said first uniform wall section (2) is a band, preferentially a circumferential band, at the bottom of the circumferential wall (1) of the hollow object. Preferably, said first uniform wall section (2) and the multi-ribbed wall section (10) are part of the same circumferential wall (1) and have the same orientation relative to each other. The first uniform wall section (2) can be limited to the zone where the bottom wall (5) connects to the circumferential wall (1). Preferably, said second uniform wall section (3) is a band, preferentially a circumferential band, at or just below the top edge of the circumferential wall (1) of the hollow object. Preferably, said first uniform wall section (2) and the multi-ribbed wall section (10) are part of the same circumferential wall (1) and have the same orientation relative to each other. Preferably, the average thickness of the uniform wall sections, including where present the in-mould label, is approximately the same as the average thickness (c) of the multi-ribbed wall section (10) at the level of said primary ribs (11). In a particular embodiment, said first uniform wall section (2) has a length in the longitudinal dimension of at least 2 mm, more preferably at least 3 mm, such as at least 4 mm.

When the in-mould label (13) extends beyond the multi-ribbed wall section (10) into the first uniform wall section (2) at the bottom edge of the circumferential wall (1), and when the first uniform wall section (2) has the same orientation as the multi-ribbed wall section (10), then a better and more uniform filling of the mould cavity at the level of the multi-ribbed wall section (10) is ensured.

With reference to Figure 6, the multi-ribbed wall section (10) of said hollow object comprises a plurality of primary ribs (11), that are separated from each other and of which the long symmetry axes lie essentially in a virtual plane encompassing the longitudinal centroidal axis of the circumferential wall, and optionally a plurality of secondary ribs (21), wherein said secondary rib (21) is connected to a primary rib (11) through at least one end and follows a trajectory that diverges from the trajectory of the primary rib to which it is connected (Figure 6A). Preferably, said secondary ribs are thinner than the primary ribs but thicker than the laminae (Figure 6B). Preferably, the average thickness (f) of the multi-ribbed wall section (10) at the level of said secondary ribs (21) is less than the average thickness (c) of the multi-ribbed wall section (10) at the evel of said primary ribs (11) and more than said average thickness (b) of the multi-ribbed wall section (10) at the level of said laminae (12) (Figure 6B).

Preferably, said hollow object has a bottom wall (5), with or without holes or slits. Preferably, said bottom wall (5) is connected to the circumferential wall (1). Preferably, said hollow object has a top opening (4) at the side of the hollow object opposite to that of the bottom wall (5). Preferably, at least one injection gate mark (6) is situated at the bottom wall (5) of said hollow object. In case of a single injection gate mark, it is preferentially positioned at the centroid of the bottom wall. In case of multiple injection gate marks, they are preferentially positioned concentrically and equidistantly relative to the centroid of the bottom wall.

Preferably, the bottom edge of the in-mould label is positioned below the junction of the bottom wall (5) with the circumferential wall (1). Preferably, the bottom edge of the first uniform wall section (2) and the bottom edge of the in-mould label are positioned below the junction of the bottom wall (5) with the circumferential wall (1), and the top edge of the first uniform wall section (2) is positioned above the junction of the bottom wall (5) with the circumferential wall (1). This feature ensures that the in-mould label is pressed against the outer wall of the cavity by the plastic melt flowing-in from the injection gate during injection moulding, and hence that the in-mould label does not hamper proper filling of the multi-ribbed wall section (10) of the circumferential wall (1).

Optionally, the hollow object of the present invention has a bottom wall comprising a multi-ribbed wall section (10). Such bottom wall can for instance, but not limited to, have the geometry shown in Figure 4.
Preferably, said hollow object is a container. Said container can be suitable for holding a content such as for instance but not limited to a beverage, a food product, medicinal pills or tablets, or a household product. Said container can alternatively be a plant container or shrub container suitable for holding a substrate for growing mosses, plants or shrubs. Said plant container or shrub container may have one or more drainage holes or drainage slits at the bottom wall and/or at the bottom of the circumferential wall.

Said object, hollow object or container of the present invention may be of any geometrical shape, size and design that is compatible with injection moulding. The transverse cross-section of said object, hollow object or container of the present invention can have different shapes, including but not limited to a circle (for instance Figures 5 and 6), an oval, an ellipse, a rectangle, a rectangle with rounded corners (for instance Figure 7), a square, a square with rounded corners, a polygon, a polygon with rounded corners, or an irregular shape.

Preferably, the average width (d) at half thickness of a primary rib of the multi-ribbed wall section (10) of said object, hollow object, or container, is relatively narrow, preferably less than 6 times, more preferably less than 5 times, most preferably less than 4 times, such as less than 3 times the the average thickness (c) of the multi-ribbed wall section (10) at the level of said primary ribs (11). Preferably, the ratio of the fraction of the surface of said multi-ribbed wall section covered by said laminae over the fraction of the surface of said multi-ribbed wall section covered by said ribs is higher than 2.5, more preferably higher than 3 times, most preferably higher than 4, such as higher than 5. The surface of said multi-ribbed wall section covered by said ribs is determined as the surface covered over the length of the ribs in between the two inflection points (t) on either side of the ribs, wherein said inflection point (t) marks the transition between the rib and the adjacent lamina.

The thickness (a), thickness (b), thickness (c), width (d) and width (e) of said object, hollow object, or container, can differ locally depending on the position within the multi-ribbed wall section (10). The average thickness (a), average thickness (b), average thickness (c), average width (d) and average width (e) of said object, hollow object, or container, is the average value of the corresponding distances averaged over the entire multi-ribbed wall section (10). The average thickness (a), average thickness (b), average thickness (c), average width (d) and average width (e) of said object, hollow object or container can be determined as the average value of the corresponding distances measured at, at least, 10 different representative locations within the multi-ribbed wall section (10).

The transverse cross-section through the ribs of said object, hollow object or container, whether primary ribs or secondary ribs, can have different shapes, including but not limited to, a square, a rectangle, a trapezoid, a triangle, an arc segment, or a bell. Preferably, in the transverse cross- section through the ribs and laminae, both sides of the ribs are tapered so as to provide a gradual transition from the rib to the adjacent lamina. This gradual transition may occur via a linear line, a convex curve, or most preferably via a concave curve.

Preferably, in the longitudinal cross-section through the first or second uniform wall section (2,3) of said object, hollow object or container, the edge of the first or second uniform wall section (2,3) adjacent to a lamina (12) is tapered so as to provide a gradual transition from the first or second uniform wall section to the adjacent lamina. This gradual transition may occur via a linear line, a convex curve, or most preferably via a concave curve.

In a second object of the present invention, a method is provided for making a thin-walled object according to the first object of the invention, said method comprising
- placing said in-mould label in the hollow mould part,
- bringing a core mould part into the hollow mould part, said core mould part comprising depressions at the zone corresponding to said multi-ribbed wall section, such that the space between the depressed sections of said zone of the core mould part and said in-mould label in the hollow mould part allows to form the plurality of said ribs, and such that the space between the non- depressed sections of said zone of the core mould part and said in-mould label in the hollow mould part allows to form the plurality of said laminae,
- injecting molten plastic polymer into the cavity of the mould,
- demoulding the mould after the injected plastic polymer has hardened, and
- ejecting the object from the core mould part with a linear movement,
wherein the average thickness of the in-mould label is less than 45% of the average thickness of the space between the non-depressed sections of said zone of the core mould part and the adjacent said hollow mould part.

Alternatively, the invention provides for a method for making a thin-walled object according to the first object of the invention, said method comprising
- placing said in-mould label on the core mould part,
- bringing a core mould part with said in-mould label into the hollow mould part, said hollow mould part comprising depressions at the zone corresponding to said multi-ribbed wall section, such that the space between the depressed sections of said zone of the hollow mould part and said in- mould label on the core mould part allows to form the plurality of said ribs, and such that the space between the non-depressed sections of said zone of the hollow mould part and said in-mould label on the core mould part allows to form the plurality of said laminae,
- injecting molten plastic polymer into the cavity of the mould,
- demoulding the mould after the injected plastic polymer has hardened, and
- ejecting the object from the core mould part with a linear movement,
wherein the average thickness of the in-mould label is less than 45% of the average thickness of the space between the non-depressed sections of said zone of the hollow mould part and the adjacent said core mould part.

The plastic polymer used for injection moulding of the thin-walled objects according to any of the embodiments of the present invention, can be any of various types of plastic polymeric materials, such as for instance but not limited to, thermoplastic polymers or copolymers, thermoplastic elastomers, or thermosetting polymers or copolymers. Most preferred are thermoplastic polymers or copolymers including, but not limited to, polymethylmethacrylate, polyethylene terephthalate, polyethylene, polypropylene, polystyrene, polyvinyl chloride, polyamide, polybenzimidazole, polytetrafluoroethylene, polylactate, or polyhydroxyalkanoate, or blends, combinations or copolymers thereof. Examples of thermosetting polymers include, but are not limited to, polyurethanes, vulcanized polyisoprene (vulcanized rubber), vulcanized styrenebutadiene, epoxy resins, polyimides, and polycyanurates, and or blends, combinations or copolymers thereof.

In-mould labels, commonly referred to as IML, are well known in the art of injection moulding and comprise a carrier base, generally consisting of a cellulosic or polymeric carrier film, on which a decorative pattern or a written message is printed. A protective varnish can be applied as a top layer to protect the decorative pattern or alternatively a second film can be adhered on the printed carrier base film. Furthermore, to improve the adhesion of the IML during moulding a heat sealable layer (a film or a coating) can be applied onto the side opposite to the printed side. The IML can also comprise a layer that has low permeability to gases, such as a layer in ethylene-vinyl-alcohol-copolymer, in polyamide or aluminium. The carrier base of the IML can, for instance but not limited to, consist of paper, polyethylene terephthalate, polyethylene, polypropylene, polystyrene, polyvinyl chloride, polyamides, polylactate, polyhydroxyalkanoate, polyurethane, polyamide, epoxy resins, or blends, combinations or copolymers thereof. The carrier base of the IML consists preferably of a plastic polymer such as for instance, but not limited to, polyethylene terephthalate, polyethylene, polypropylene, polystyrene, polyvinyl chloride, polyamides, polylactate, polyhydroxyalkanoate, polyurethane, polyamide, epoxy resins, or blends, combinations or copolymers thereof. The carrier base of the IML consists preferably of a plastic polymer that is the same as the plastic polymer used for injection moulding of the thin-walled object. The carrier base of the IML consists preferably of a plastic polymer such as polyethylene, polypropylene or polystyrene.

The IML can be arranged on the outer side of the walls of the container or, alternatively, on the inner side of the walls of the container. When the IML is arranged at the outer side of the walls there is no risk of transfer of undesired or harmful substances from the IML to the content of the container, since the inner side of the IML is fully covered by injection moulded plastic at the ribs and laminae adhered to it. When the IML is arranged at the outer side of the walls, then the outer side of the walls is smooth and the inner side is ribbed. However, the IML can also be placed at the inner side of the wall, in which case composite IMLs can be used with at the inner side a proper layer that is compatible with the content of the container. When the IML is arranged at the inner side of the walls, then the inner side of the walls is smooth and the outer side is ribbed.

The invention resides not in any one of these features per se, but rather in the particular combination of all of them herein disclosed and claimed and it is distinguished from the prior art in this particular combination of all of its structures for the function specified. Those skilled in the art will appreciate that the conception, upon which this disclosure is based, may readily be utilized as a basis for the designing of other structures, methods and systems for carrying out the several purposes of the present invention. It is important, therefore, that the claims be regarded as including such equivalent constructions insofar as they do not depart from the spirit and scope of the present invention. Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

In the context of the present invention, the longitudinal dimension means the dimension parallel to the longitudinal centroidal axis of the object while said object is being held in its upright position, typically when its bottom is positioned on a horizontal surface. When the object is held in its upright position, typically when its bottom is positioned on a horizontal surface, the longitudinal dimension typically coincides with the vertical dimension and the longitudinal centroidal axis of the object coincides with the vertical centroidal axis of the object.

In the context of the present invention, the transverse dimension means the dimension perpendicular to the longitudinal centroidal axis of the object while said object is being held in its upright position, typically when its bottom is positioned on a horizontal surface. When the object is held in its upright position, typically when its bottom is positioned on a horizontal surface, the transverse dimension typically corresponds to the horizontal dimension.

In the context of the present invention, top refers to a relative highest position of an object of the object when the object is positioned in its normal upright position.

In the context of the present invention, bottom refers to a relative lowest position of an object of the object when the object is positioned in its normal upright position.

The present invention may, if necessary for the quality control of the produced objects, include the measurement of the average thickness (a), average thickness (b), and/or average thickness (c) of the multi-ribbed wall section (10) of said object. Said measurement comprises the microscopy technique described in example 1 of the present invention. The invention is further illustrated by way of the illustrative embodiments described below.

### Example 1:

A mould for injection moulding was made with for making a container with the following basic geometry (Figure 8):
- circular bottom wall (5) with 71 mm diameter, with the single injection gate mark in the centroid of the bottom wall
- frustroconical circumferential side-wall (1), with 71 mm diameter at the bottom and 77 mm diameter at the top
- a circumferential skirt (7) depending from the circumferential wall below the junction of the bottom wall (5) with the circumferential wall (1)
- a collar (8) with radial reinforcing walls just below the top rim of the circumferential wall, with an external diameter of 86 mm, and which together with the top rim (9) of the circumferential wall forms a closure system for an appropriately shaped lid.
- a height of 75 mm.

The combination of a hollow mould with different core moulds was used to make different types of containers. The in-mould-labels for the circumferential side-wall were in polypropylene and cut in the shape of the geometrically developed surface of the frustroconical circumferential wall of the container. The in-mould labels were placed in the hollow-mould prior to injection moulding. Polypropylene was used as a thermoplastic for injection moulding.

Containers type A, B, C, D, E had primary ribs (11) in the circumferential side wall as shown in Figure 8. Thirty nine of the forty primary ribs of the containers type A, B, C, D, E had a width (d) at half thickness (as defined in the detailed description of the invention) of 0.8 mm at the top and 1.6 mm at the bottom, and the width (d) increased linearly from top to bottom. One of the forty primary ribs had a width (d) at half thickness of 3.4 mm at the top and 4.2 mm at the bottom, and the width (d) increased linearly from top to bottom. This single wider primary rib is positioned at the zone where the two side edges of the in-mould label join. The presence of this wider primary rib is optional.

Container type A had a circumferential wall with primary ribs with an average thickness (c) (as defined in the detailed description of the invention) of 0.40 mm, but had no laminae. The average thickness (a) of the in-mould label (as defined in the detailed description of the invention) was 0.06 mm.

Container type B had a circumferential wall with primary ribs with an average thickness (c) of 0.40 mm, and had, in between the primary ribs, laminae with an average thickness (b) (as defined in the detailed description of the invention) of 0.18 mm. The average thickness (a) of the in-mould label was 0.10 mm.

Container type C had a circumferential wall with primary ribs with an average thickness (c) of 0.40 mm, and had, in between the primary ribs, laminae with an average thickness (b) of 0.16 mm. The average thickness (a) of the in-mould label was 0.08 mm.

Container type D had a circumferential wall with primary ribs with an average thickness (c) of 0.40 mm, and had, in between the primary ribs, laminae with an average thickness (b) of 0.14 mm. The average thickness (a) of the in-mould label was 0.06 mm.

Container type E had a circumferential wall with primary ribs with an average (c) of 0.40 mm, andhad, in between the primary ribs, laminae with an average thickness (b) of 0.16 mm. Container type E had no in-mould label.

Container type F had no ribs, but instead a circumferential side wall with a uniform thickness of 0.40 mm. Container type F had the same overall shape as shown in Figure 3, except that the ribs (and laminae) were replaced by full walls.

The circumferential wall (1) of the containers of type A, B, C, D, and E had a first uniform wall section (2) in the form of a circumferential band at the bottom of the circumferential wall (1), and said first uniform wall section (2) encompassed the skirt (7). The circumferential wall (1) of the containers of type A, B, C, D, and E had a second uniform wall section (3) in the form of a circumferential band situated just below the top of the circumferential wall (1), and said second uniform wall section (3) was connected to the collar (8).

The bottom edge of the in-mould label in the containers of type A, B, C, D, and F was positioned at the bottom edge of the skirt (7), such that the bottom edge of the in-mould label was positioned below the junction of the bottom wall (5) with the circumferential wall (1) (Figure 8B).

It was surprisingly found that the presence of ribs, laminae and in-mould label is important to succeed in making objects with a lower average wall thickness, and hence using less polymer per unit of wall surface of the object, without the drawbacks of the containers described in the prior art. It was further surprisingly found that the ratio of the thickness of the laminae versus the in- mould label has a strong impact on the consistency of the shape of the object made by injection moulding.

The circumferential side wall of container type A was severely wrinkled (Figure 4), which illustrates the problems encountered in practice with containers with injection moulded ribs and parts of walls consisting solely of an in-mould label, such as for instance the containers described in EP2236264, CA2445553 and DE3913468.

The circumferential side wall of containers type B and C was bulged and variable (Figure 9), and deviated in an inconsistent manner from the designed shape, which illustrates the problems encountered in practice when stacking containers of type B or C (i.e. less efficient stacking), such as for instance the containers described in JP2014069851 (B-type).
In contrast, the containers of type D had a straight and consistent circumferential side wall (Figure 9). This was contrary to expectation since, relative to the containers of type D, the containers of type B and C have a higher average thickness (a) of the in-mould label, and therefore a stronger IML, and a higher average thickness (b) of the laminae, and therefore stronger laminae.

Bulging of the shapes can be a problem with containers since this leads to an increased nesting height upon stacking of the containers, and to difficulties with destacking. This is illustrated in Figure 10, where the stacking is shown of 3 nested containers of type B, C, D, E, and F. Containers of types B and C had a markedly increased nesting height relative to the reference container of type F with uniform walls. The containers of type D, which has a straight and consistent circumferential side wall (Figure 9) had the same nesting height as the reference containers of type F with uniform walls (Figure 10). Even the containers of type E lacking an in-mould label had a bulged side wall and an increased nesting height relative to the reference containers of type F with uniform walls (Figure 10). Therefore, the containers of type D are superior with respect to shape consistency relative to containers with alternating thicker ribs and thin wall zones without an in-mould label, such as described in US3944124, US4807775, WO2008074908, EP1582471, GB1332344, JP2006001569, JP2004284682, DE2855501, GB1038897, WO2007108678, and WO2009137914. In addition, in contrast to the containers described in US3944124, US4807775, WO2008074908, EP1582471, GB1332344, JP2006001569, JP2004284682, DE2855501, GB1038897, WO2007108678, and WO2009137914, the containers of the present invention can be decorated with high quality print through the printed in-mould label.

The containers of type D could be ejected without any problem with linear ejection, which is an advantage over the containers described in in WO2013153142. Moreover, its design principles can be applied to objects with all types of shapes that can be made by injection moulding, and not only on objects with shapes with a circular cross-section.

Pieces were cut with scissors from the multi-ribbed wall section of the circumferential wall of the container of type D, cooled to -30°C using a liquid N2 based cooling system (Leica), and microtomed with a microtome (Leica) into coupes of 10 µm thickness cut in the direction perpendicular on the circumferential wall using a diamond knife at 1mm/s. The coupes were placed in between glass microscopy plates in the presence of silicon oil and analysed by polarized optical microscopy (POM) with the aid of a microscope (Olympus, model BHS) using polarized light. The photomicrographs shown in Figure 11 allow to determine the thickness (a), thickness (b) and thickness (c) of the multi-ribbed wall section. The average thickness (a), average thickness (b) and average thickness (c) of the multi-ribbed wall section (10) can be determined as the average value of the corresponding distances measured on different coupes made at, at least, 10 representative locations within the multi-ribbed wall section (10).

## Claims

1. A thin-walled container comprising a bottom wall (5) connected to a circumferential wall (1) wherein said container is produced by injection moulding and wherein at least one of the walls of said container comprises
- a first uniform wall section (2) with essentially uniform wall thickness,
- a second uniform wall section (3) with essentially uniform wall thickness, and,
- a multi-ribbed wall section (10), such multi-ribbed wall section comprising
o a plurality of primary ribs (11) that are made of injection moulded plastic polymer and that connect said first and second uniform wall sections,
o a plurality of laminae (12) that are made of injection moulded plastic polymer and that extend in between said primary ribs (11), and
o an in-mould label (13) that is adhered to both said primary ribs (11) and laminae (12),
said container being further **characterized in that** the average thickness (b) of the multi-ribbed wall section (10) at the level of said laminae (12) is less than 50% of the average thickness (c) of the multi-ribbed wall section (10) at the level of said primary ribs (11), preferably being less than 0.22mm, and **in that** the average thickness (a) of the in-mould label is less than 45% of the average thickness (b) of the multi-ribbed wall section (10) at the level of said laminae (12).

2. A thin-walled container according to claim 1 wherein the plurality of primary ribs (11) and laminae (12) form a contiguous layer.

3. A thin-walled container according to any of the claims 1 to 2 wherein said primary ribs (11) are separated from each other and follow a substantially straight trajectory in at least one dimension.

4. A thin-walled container according to any of the claims 1 to 3 wherein the in-mould label (13) extends beyond the multi-ribbed wall section (10) into at least a part of the first uniform wall section (2) and/or into at least a part of the second uniform wall section (3).

5. A thin-walled container according to any of the claims 1 to 4 wherein said multi-ribbed wall section (10) comprises a plurality of secondary ribs (21), wherein a secondary rib (21) is connected to a primary rib (11) through at least one end and follows a trajectory that diverges from the trajectory of the primary rib to which it is connected.

6. A thin-walled container according to claim 5 wherein the average thickness (f) of the multi-ribbed wall section (10) at the level of said secondary ribs (21) is less than 90% of said average thickness (c) of the multi-ribbed wall section (10) at the level of said primary ribs (11), and more than 111% of said average thickness (b) of the multi-ribbed wall section (10) at the level of said laminae (12).

7. A thin-walled container according to any of the claims 1 to 6 wherein in the transverse cross- section through said multi-ribbed wall section (10), both sides of the primary ribs (11) are tapered so as to provide a gradual transition from said rib to the adjacent lamina.

8. A thin-walled container according to any of the claims 1 to 7 wherein the thin-walled container has a hollow shape and comprises a circumferential wall (1), said circumferential wall (1) comprising a multi-ribbed wall section (10).

9. A thin-walled container according to claim 8 wherein said primary ribs (11) have trajectories that lie essentially in a virtual plane encompassing the longitudinal centroidal axis of said circumferential wall (1).

10. A thin-walled container according to claim 9 wherein said primary ribs (11) follow a substantially straight trajectory that lies essentially in a virtual plane encompassing the longitudinal centroidal axis of said circumferential wall (1).

11. A thin-walled container according to any of the claims 8 to 10 wherein said first uniform wall section (2) is a circumferential band at the bottom of the circumferential wall (1) and said second uniform wall section (3) is a circumferential band at or just below the top edge of the circumferential wall (1).

12. A thin-walled container according to claim 1 wherein the container comprises one or more holes or slits at the bottom wall (5) and/or at the bottom of the circumferential wall (1).

13. A thin-walled container according to claim 12, wherein the bottom edge of the first uniform wall section (2) and the bottom edge of the in-mould label are positioned below the junction of the bottom wall (5) with the circumferential wall (1), and wherein the top edge of the first uniform wall section (2) is positioned above the junction of the bottom wall (5) with the circumferential wall (1).

14. A method to make a thin-walled container according to any of the claims 1 to 13, said method comprising
- placing said in-mould label on the core mould part,
- bringing a core mould part into the hollow mould part, said core mould part comprising depressions at the zone corresponding to said multi-ribbed wall section, such that the space between the depressed sections of said zone of the core mould part and said in-mould label in the hollow mould part allows to form the plurality of said ribs, and such that the space between the non- depressed sections of said zone of the core mould part and said in-mould label in the hollow mould part allows to form the plurality of said laminae,
- injecting molten plastic polymer into the cavity of the mould,
- demoulding the mould after the injected plastic polymer has hardened, and
- ejecting the object from the core mould part with a linear movement,
wherein the average thickness of the in-mould label is less than 45% of the average thickness of the space between the non-depressed sections of said zone of the core mould part and the adjacent said hollow mould part.

15. A method to make a thin-walled container according to any of the claims 1 to 13, said method comprising
- placing said in-mould label on the core mould part,
- bringing a core mould part with said in-mould label into the hollow mould part, said hollow mould part comprising depressions at the zone corresponding to said multi-ribbed wall section, such that the space between the depressed sections of said zone of the hollow mould part and said in- mould label on the core mould part allows to form the plurality of said ribs, and such that the space between the non-depressed sections of said zone of the hollow mould part and said in-mould label on the core mould part allows to form the plurality of said laminae,
- injecting molten plastic polymer into the cavity of the mould,
- demoulding the mould after the injected plastic polymer has hardened, and
- ejecting the object from the core mould part with a linear movement,
wherein the average thickness of the in-mould label is less than 45% of the average thickness of the space between the non-depressed sections of said zone of the hollow mould part and the adjacent said core mould part.
